Europäisches Patentamt

European Patent Office

Office européen des brevets

(11) Veröffentlichungsnummer: **0 092 164**
**A2**

## (12) EUROPÄISCHE PATENTANMELDUNG

(21) Anmeldenummer: **83103585.2**

(51) Int. Cl.³: **B 03 B 9/06**

(22) Anmeldetag: **14.04.83**

(30) Priorität: **17.04.82 DE 3214221**

(43) Veröffentlichungstag der Anmeldung: **26.10.83**
**Patentblatt 83/43**

(84) Benannte Vertragsstaaten: **AT BE CH DE FR GB IT LI LU NL SE**

(71) Anmelder: **Kissel, Gernot, Closweg 2, D-6720 Speyer (DE)**
Anmelder: **Herklotz, Klaus, Hasenpfuhlstrasse 7, D-6720 Speyer (DE)**
Anmelder: **Dyroff, Karl, Landfriedstrasse 8, D-6900 Heidelberg (DE)**

(72) Erfinder: **Kissel, Gernot, Closweg 2, D-6720 Speyer (DE)**
Erfinder: **Herklotz, Klaus, Hasenpfuhlstrasse 7, D-6720 Speyer (DE)**
Erfinder: **Dyroff, Karl, Landfriedstrasse 8, D-6900 Heidelberg (DE)**

(74) Vertreter: **Moser, Herbert, Dr.-Ing., Nowackanlage 15, D-7500 Karlsruhe (DE)**

(54) **Verfahren zum getrennten Sammeln und Aufbereiten von Hausmüll sowie Vorrichtungen hierzu.**

(57) Ein Verfahren zum getrennten Sammeln und Aufbereiten von Hausmüll und hausmüllartigen Industrieabfällen, bei dem der Müll ohne Vermischung in mehreren Abfallgruppen gesammelt, in getrennten Behältern gelagert und getrennt abtransportiert wird, soll hinsichtlich des Sortiervorganges der Abfallgruppen verbessert werden. Hierzu ist vorgesehen, daß bei der Mülleingabe eine Auswahlsteuerung betätigt und von dieser ein der Abfallgruppe angepaßtes Behandlungsverfahren angesteuert wird, welches den Müll zur Kompaktlagerung behandelt und in der Kompaktform in dem zugehörigen Behälter ablagert, und daß die einzelnen Abfallgruppen in Kompaktform abtransportiert werden.

0092164
A 902

Anmelder: Gernot Kissel, Speyer (BRD)
Klaus Herklotz, Speyer
Karl Dyroff, Heidelberg

Verfahren zum getrennten Sammeln und Aufbereiten von Hausmüll sowie Vorrichtungen hierzu

Die Erfindung bezieht sich auf ein Verfahren zum getrennten Sammeln und Aufbereiten von Hausmüll und
hausmüllartigen Industrieabfällen, bei dem der Müll
ohne Vermischung in mehreren Abfallgruppen gesammelt,
in getrennten Behältern gelagert und getrennt abtransportiert wird. Eine weitere hiermit verknüpfte
Erfindung betrifft ein Verfahren zum Aufbereiten
von Papier und papierartig faltbaren Kunststoffen
in eine kompakte, weitgehend formbeständige Paketform,
bei dem das zugeführte Papier gefaltet und unter
Preßdruck zu einem Preßling verdichtet wird. Ferner werden vorteilhafte Vorrichtungen zur Durchführung der Verfahren angegeben.

Zum Recycling wertvoller Rohstoffe und zur Energiegewinnung aus Hausmüll und hausmüllartigen Industrieabfällen ist es erforderlich, den inhomogen anfallenden Müll in mehrere Abfallgruppen zu unterteilen und entsprechend den besonderen Eigenschaften einer solchen Gruppe weiterzuverarbeiten. Bekannte Abfallgruppen, die eine entsprechende angepaßte Weiterbehandlung erfordern, sind beispielsweise Glas, Blech, Papier und faltbare Kunststoffe, organischer Abfall und Sondermüll. Unter Sondermüll werden Abfallstoffe verstanden, welche wegen ihrer besonderen, teilweise gefährdenden Eigenschaften (Spraydosen, Quecksilberbatterien usw.) nur in ganz speziellen Aufbereitungsverfahren behandelt werden können, im Rahmen der allgemeinen Müllbeseitigung jedoch unbehandelt bleiben müssen.

Es ist bereits bekannt, Hausmüll in mehreren nach Abfallgruppen getrennten Behältern zu sammeln und aus diesen getrennt abzutransportieren. Der Nachteil des vorbekannten Verfahrens liegt darin, daß der Sortiervorgang bei der Mülleingabe dem Benutzer übertragen wird. Er hat den bestimmungsgemäßen Behälter auszuwählen, und aus Bequemlichkeitsgründen wird daher in manchen Fällen auf eine ordnungsgemäße Gruppensortierung verzichtet. Außerdem ergibt sich wegen der Sperrigkeit der einzelnen Müllkomponenten nur eine ungünstige weitgehend unvollständige Ausnutzung des Speicherraumes. Die Abfallgruppe "organische Abfälle" führt außerdem bei nicht dicht schließenden Behältern bzw. bei der Mülleingabe zu einer teilweise unannehmbaren Geruchsbelästigung.

Die Erfindung geht von der Aufgabenstellung aus, ein Verfahren zum getrennten Sammeln und Aufbereiten von Hausmüll und hausmüllartigen Industrieabfällen anzugeben, bei dem einerseits der Sortiervorgang erleichtert und andererseits eine raumausnutzende Lagerung des Mülls bereits beim Benutzer durchgeführt wird. Damit lassen sich größere Zeiträume für die Müllabfuhr festlegen, und dieses bedeutet in Verbindung mit dem getrennt in Abfallgruppen sortiert anfallenden Müll eine entscheidende Kostenersparnis in einem umweltfreundlichen Verfahren.

Die Lösung der angegebenen Aufgabenstellung erfolgt dadurch, daß bei der Mülleingabe eine Auswahlsteuerung betätigt und von dieser ein der Abfallgruppe angepaßtes Behandlungsverfahren angesteuert wird, welches

4

den Müll zur Kompaktlagerung behandelt und in der Kompaktform in dem zugehörigen Behälter ablagert, und daß die einzelnen Abfallgruppen in Kompaktform abtransportiert werden. Der Benutzer wird somit durch den Sortiervorgang nicht belastet, er betätigt lediglich nach der erkennbaren Abfallgruppe eine Auswahlsteuerung, und diese wählt das angepaßte Behandlungsverfahren, beispielsweise bei der Abfallgruppe "Glas" eine Zerkleinerung, so daß der Müll unmittelbar bei der Eingabe in eine Kompaktform überführt und selbständig im zugehörigen Behälter abgelagert wird.

Soll der Benutzer vollständig vom Sortiervorgang entlastet werden, so kann der Auswahlsteuerung vorteilhaft ein Abfallgruppen-Erkennungssystem vorgeschaltet werden, welches die Auswahlsteuerung bestimmt. Die einzelnen Abfallgruppen lassen sich beispielsweise nach Ultraschallreflexion, elektrischer Leitfähigkeit oder dergleichen unterscheiden.

Da bei Hausmüll die Abfallgruppe "Papier und papierartig faltbare Kunststoffe" einen wesentlichen Anteil darstellt, wird hierfür ein zweckmäßiges Verfahren zur Aufbereitung in eine kompakte, weitgehend formbeständige Paketform angegeben, welches darin besteht,

5

daß in den Preßling mindestens ein perforierend wirkendes Element eingeführt wird, welches die erzeugte Paketform gegen Auffedern sichert.

Bisher war es erforderlich, zur Erzeugung einer formbeständigen Paketform die Papierabfälle in kleine Schnitzel oder Streifen zu zerreißen und anschließend zusammenzupressen. Bei größeren blattförmigen Abfällen führt der Preßvorgang zwar zunächst zu einer Verdichtung in einem Paket, das jedoch wegen der Elastizität des Papiers nach der Wegnahme des Preßdrucks wieder auffedert und in diesem Zustand nur schlecht weitertransportiert werden kann. Hier wird durch die Einführung des perforierend wirkenden Elementes nach dem Verdichten in die Paketform ein günstiger Weg gewiesen, diese Kompaktform gegen Auffedern zu sichern.

Dabei kann es vorteilhaft sein, daß das perforierend wirkende Element in den Preßling derart eingeführt wird, daß sich an den Lochrändern der Schichten Randausformungen und /oder Läppchen bilden, welche mehrere benachbarte Schichten verbinden und nach dem Zurückziehen des Elementes gegen Auffedern sichern. Eine andere gegebenenfalls zweckmäßige Fixierungsart kann darin bestehen, das perforierend wirkende Element, welches Nadelform aufweist, im Paket zu belassen und

6

dabei bevorzugt Nadeln aus einem dem Material bzw. der Weiterverarbeitung des Preßlings angepaßten Werkstoff zu verwenden. Im allgemeinen werden mehrere perforierend wirkende Elemente gleichzeitig eingeführt, und diese bewirken entweder die Verkeilung der benachbarten blattförmigen Anteile im Bereich des Lochkanals, die auch nach dem Zurückziehen des Elementes erhalten bleibt, oder durch das verbleibende Element eine Sicherung in der Art einer Nadelverbindung. Vorteilhaft können die perforierend wirkenden Elemente so geführt werden, daß das mit mehreren Faltkanten gefaltete blattförmige Gut in mehreren Faltflächen durchstoßen wird.

Obwohl das Verfahren zum Aufbereiten von Papier als zweckmäßiger Teilschritt des eingangs erläuterten Hauptverfahrens verwendet werden kann und hierbei bevorzugt Anwendung findet, ist seine Benutzung auch dann vorteilhaft möglich, wenn es sich ausschließlich um die Überführung von Papier und papierartig faltbaren Kunststoffen in eine Lage- oder Kompaktform handelt.

Eine Vorrichtung zur Durchführung des Hauptverfahrens kann vorteilhaft in der Weise ausgebildet sein, daß in einer Müllsammelvorrichtung eine Eingabevorrichtung und den Abfallgruppen (z.B. Glas, Blech, Papier und faltbare Kunststoffe, organischer Abfall) zugeordnete Behandlungsvorrichtungen zur Erzielung einer raumsparenden Lagerungsform vorgesehen sind, daß in der den Abfallgruppen entsprechenden Anzahl Teilbehälter vorgesehen sind, daß eine Auswahlsteuervorrichtung zur Auswahl der Abfallgruppe vorhanden ist, und daß diese Auswahlsteuervorrichtung mit Auswahlelementen verbunden ist, welche die Verbindung zwischen der Eingabevorrichtung, der ausgewählten Behandlungsvorrichtung und dem zugeordneten Teilbehälter herstellen.

Für die Abfallgruppe "organischer Abfall" erscheint es vorteilhaft, in der Müllsammelvorrichtung eine Vorrichtung zur konservierenden Nachbehandlung vorzusehen. Diese kann beispielsweise eine keimtötende Substanz einsprühende oder einstäubende Einrichtung sein. Zweckmäßiger erscheint die Verwendung einer UV-Lichtquelle, welche die Zersetzung der organischen Abfälle und die damit verbundene Geruchsbelästigung weitgehend ausschließt.

Eine vorteilhafte Vorrichtung zum Aufbereiten von Papier und papierartig faltbaren Kunststoffen, die eine der Behandlungsvorrichtungen innerhalb der Müll-

0092164

sammelvorrichtung darstellen kann, läßt sich vorteilhaft derartig aufbauen, daß in einem Aufnahmeraum relativ gegeneinander bewegbare Preßbacken vorgesehen sind, welche Ausnehmungen aufweisen, durch die Faltmesser hindurchgreifen, daß in dem Aufnahmeraum in zu den Preßbacken senkrechter Bewegungsrichtung Querkolben gegeneinander bewegbar sind, und daß ferner in den Faltmessern Nadeln gelagert sind, welche zum Eingriff in den Aufnahmeraum im Bereich des Preßlings vorschiebbar sind.

Die durch die Erfindung erreichten Vorteile bestehen vor allem in einer wesentlichen Vereinfachung des Sortiervorgangs, die seine ordnungsgemäße Ausführung erwarten läßt, und in einer Kompaktlagerung bereits an der Stelle des Müllanfalls, welche größere Abholungszeiträume ermöglicht, ohne daß gleichzeitig eine unzumutbare Belästigung beispielsweise durch Zersetzung von organischen Abfällen hingenommen werden müßte. Die Müllsammelvorrichtung gemäß der Erfindung kann im wesentlichen in der Form und Größe üblicher Müllbehälter ausgebildet werden, so daß im Gegensatz zum vorbekannten Getrenntsortieren benutzerseitig keine zusätzlichen Ansprüche an Abstellraum gestellt werden.

Weitere Merkmale der Erfindung sind aus den beigefügten Ausführungsbeispielen zu entnehmen; es zeigen:

9

Fig. 1  einen Horizontalschnitt durch eine kombinierte Müllaufbereitungsvorrichtung gemäß
        der Erfindung mit abgenommenem Eingabeteil,

Fig. 2  einen Vertikalschnitt längs der Linie II-II

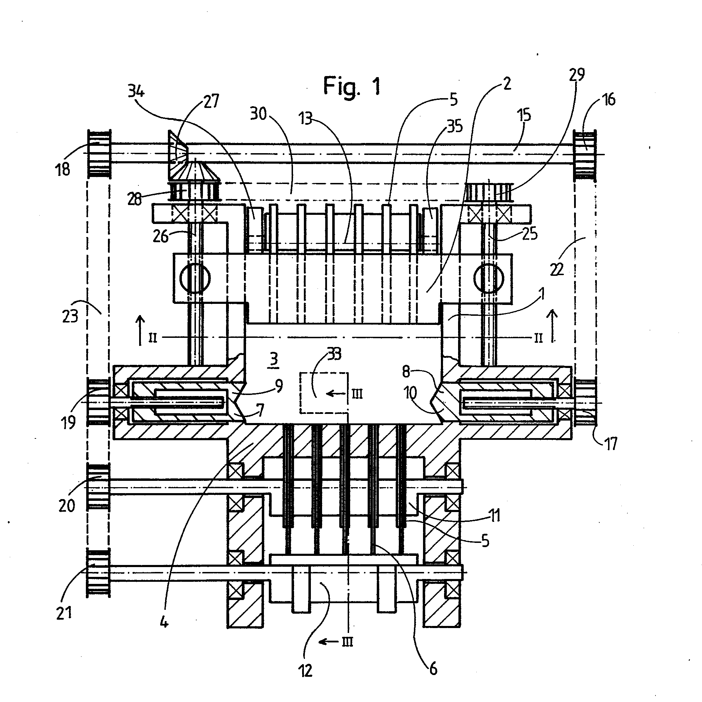

        in Fig. 1,

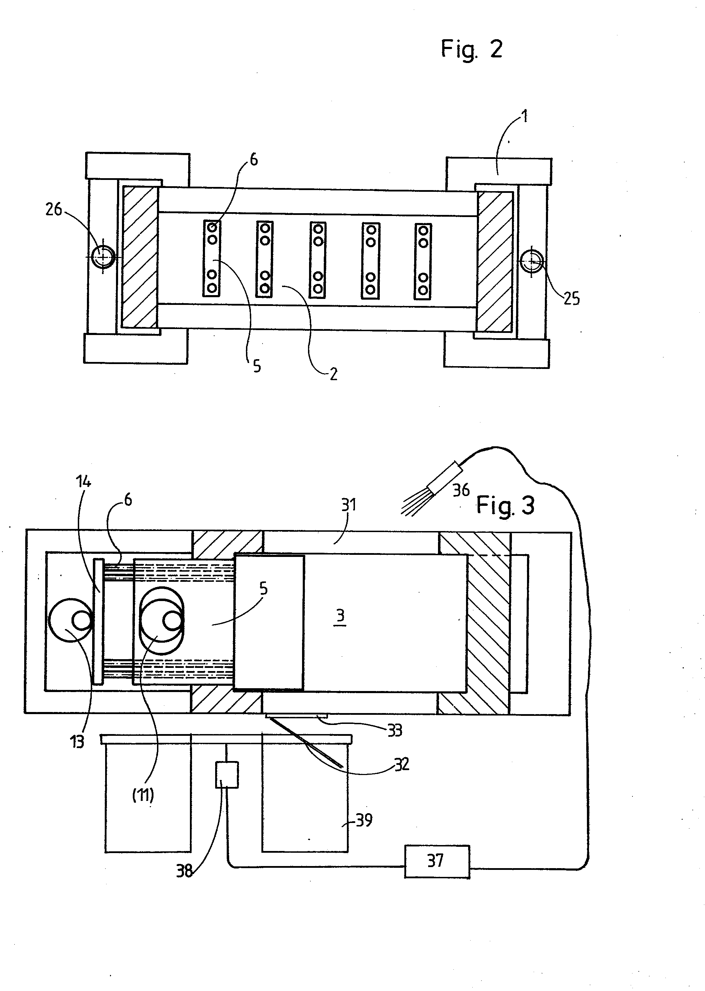

Fig. 3  einen Vertikalschnitt längs der Linie III-III
        in Fig. 1,

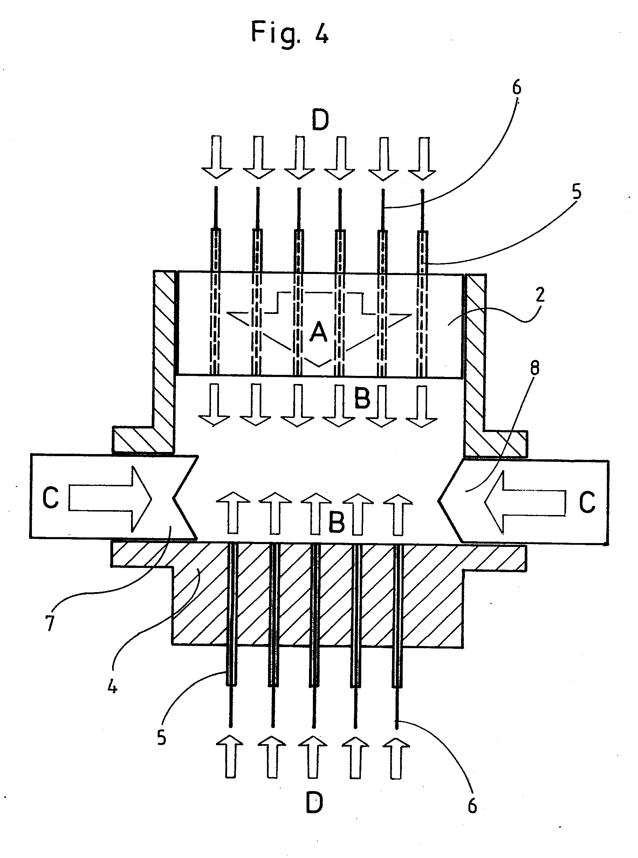

Fig. 4  eine Ausschnittsdarstellung zur Erläuterung des Ablaufs der Arbeitsvorgänge,

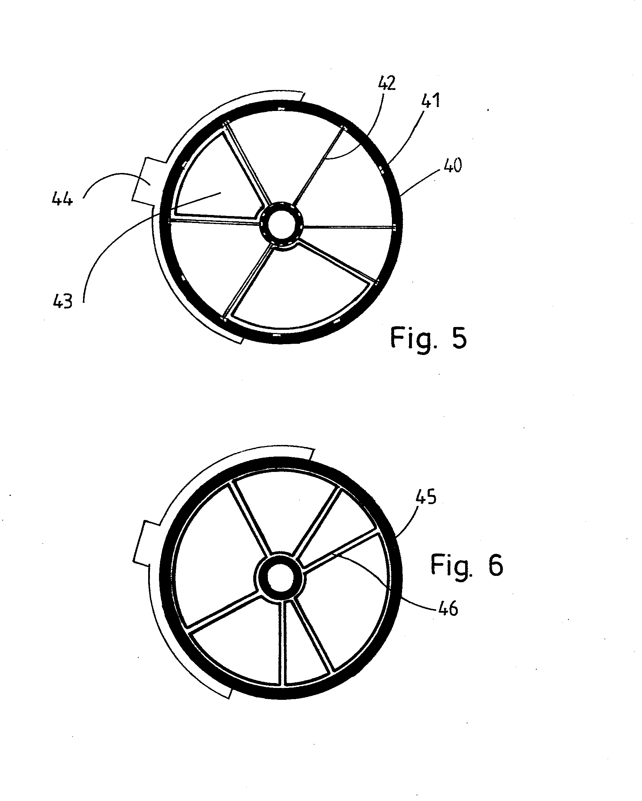

Fig. 5  eine Draufsicht auf einen Müllbehälter
        mit variablen Trennwänden und festen Einsatzgefäßen,

Fig. 6  eine Draufsicht auf einen Müllbehälter
        mit festen Trennwänden.

Bei der Müllaufbereitungsvorrichtung nach Fig. 1 - 3
ist an einem Führungsgestell  1 ein verschiebbarer
Preßbacken 2 vorgesehen. Der Preßbacken 2 ist in einen
Eingaberaum 3 gegen einen feststehenden Preßbacken 4
horizontal  verschiebbar. In den Preßbacken 2,4 sind
stumpfe Faltmesser 5 vorgesehen, welche, wie in Fig. 2
erkennbar, Führungen für Nadeln 6 aufnehmen.

Am Grundgestell 1 sind mit einer Bewegungsrichtung senkrecht zur Bewegungsrichtung des bewegbaren Preßbackens 2 Querkolben 7,8 vorgesehen. Der Querkolben 7 zeigt dabei eine prismatische Ausformung 9, welche einem Prismaansatz 10 des anderen Querkolbens 8 entspricht.

Zum Vorschub der Faltmesser 5 dient ein Exzenterantrieb 11, welcher in der Zeichnung (Fig. 1) nur in Verbindung mit den Faltmessern 6 des feststehenden Preßbackens 4 in Fig. 3 näher erläutert wird. Selbstverständlich ist für die im bewegbaren Preßbacken 2 angeordneten Faltmesser 5 ein gleichartiger Bewegungsantrieb vorzusehen. Das Vorschieben und Zurückziehen der Nadeln 6 erfolgt über einen weiteren Exzenterantrieb 12,13. Dieser Exzenterantrieb 13 wirkt auf einen Nadelträger 14, an dem jeweils vier Nadeln 6 befestigt sind (vgl. Fig. 3).

Der Antrieb des bewegbaren Preßbackens 2, der Querkolben 7,8 sowie der Faltmesser 5 und der in ihnen geführten Nadeln 6 des Preßbackens 4 geht von einer Antriebswelle 15 und Zahnrädern 16,17; 18,19,20,21, 28,29 in Verbindung mit Zahnriemen 22,23,30 aus. Zum Bewegungsantrieb des verschiebbaren Preßbackens 2 dienen Gewindespindeln 25,26, welche mit der Antriebswelle 15 über einen Winkelantrieb 27 unter Zwischenschaltung der Zahnräder 28,29 sowie eines Zahnriemens 30 verbunden sind.

Die jeweiligen Bewegungsvorgänge werden dadurch gesteuert, daß sich in den Zahnrädern integrierte Magnetkupplungen befinden, welche nach dem gewünschten Bewegungsablauf in an sich bekannter Weise durch Einrücken oder Auslösen der Magnetkupplungen gesteuert werden.

In der gezeigten Ausführung der Fig. 1 ist der Vorschub-Antrieb für die Faltmesser 5 im bewegbaren Preßbacken 2 nicht als Zahnradantrieb, sondern als beiderseits angeordnete elektromagnetische Kippkupplungen 34,35 ausgebildet. Unter Umständen kann auch die in Verbindung mit dem feststehenden Preßbacken 4 vorgesehene Antriebsanordnung mit Exzenterantrieb 11 für den bewegbaren Preßbacken 2 gewählt werden. Bei dem bewegbaren Preßbacken 2 ist in Fig. 1 außerdem aus Übersichtlichkeitsgründen der zusätzlich erforderliche Antrieb der Nadeln 6 weggelassen worden. Es erscheint gegebenenfalls auch eine konstruktive Lösung vorteilhaft, bei der die Nadeln 6 nur in einer Messerreihe, d.h. in den Messern des feststehenden Preßbackens 4 oder des bewegbaren Preßbackens 2 angeordnet sind.

Eine in Fig.1 als Randkontur 24 sichtbare Eingabeöffnung 31 als Zugang zum Eingaberaum 3 ist in Fig. 3 erkennbar. Fig.3 zeigt auch die mit einer Klappe 32 verschließbare Ausgabeöffnung 33.

12                                    0092164

In Fig. 3 wird ferner eine Auswahlsteuerung schematisch dargestellt: Zur Erkennung der Abfallgruppe dient eine Photozelle 36, die mit einem Steuergerät 37 verbunden ist. Das Steuergerät 37 steuert einen Drehantrieb 38, welcher einen bestimmten Müllbehälter, z.B. 39, in den Abwurfbereich der Klappe 32 bringt.

Die Darstellung der Fig.4 erläutert die zur Müllzerkleinerung bzw. -verdichtung erforderlichen Bewegungsvorgänge.

A. Der bewegbare Preßbacken 2 wird gegen den feststehenden Preßbacken 4 vorgeschoben, um einen ersten Preßvorgang zu erreichen. Der Querkolben 7 bildet den Anschlag für den Vorschub des bewegbaren Preßbackens 2.

B. Das Vorschieben der beidseitig versetzt angeordneten stumpfen Faltmesser 5 dient nach dem ersten Preßvorgang zur Herstellung einer zieharmonikaartigen Faltung. Nach dem Erreichen dieser Faltung werden die Faltmesser 5 wieder zurückgezogen.

C. Die Bewegung der beiden Querkolben 7,8 dient zur Erzeugung eines zweiten Preßvorgangs und einer weiteren Faltung.

D. Das Vorstoßen der Nadeln 6 erfolgt mit der Absicht, schräg durch die senkrecht stehende Faltung des Einsatzgutes Läppchen anzureißen, die sich in den nächsten Lagen verkeilen und dadurch paketartig geformtes Gut zusammenhalten.

Zur Bearbeitung der anfallenden Materialien sind folgende Arbeitsgänge in der angegebenen Reihenfolge erforderlich:

Für Glas:               A und C,
für organischen Abfall: A und C,
für metallische Abfälle:A, B und C,
für Papier:             A, B, C und D,
für Kunststoffe:        A, B, C und D.

Fig. 5 und 6 zeigt in der Draufsicht zwei Ausführungsformen von Müllaufnahmebehältern.

In einem zylinderförmigen Müllbehälter 40 sind in Wandaussparungen 41 Trennwände 42 entsprechend dem zu erwartenden mengenmäßigen Anteil der Abfälle eingesetzt, und in diesen Kompartments befinden sich feste, kreissektorförmige Einsatzbehälter 43. Zum Anschluß an eine entsprechende Kupplungsvorrichtung eines Containers oder dergleichen dient ein Anschlußbügel 44. Selbstverständlich kann der Müllbehälter 40 gegebenenfalls auch lediglich unter Benutzung der einsetzbaren Trennwände 42 und ohne zusätzliche kreissektorförmige Behälter 43 benutzt werden.

14

Fig. 6 zeigt eine analoge Ausbildung eines Müllbehälters 45 mit feststehenden Trennwänden 46.

Es hat sich gezeigt, daß gegebenenfalls eine zweckmäßige Art des Sammelns und Sortierens der einzelnen
Abfallgruppen dadurch erreicht werden kann, daß in
gerüstartig ausgebildeten Müllsammelbehältern entsprechend gekennzeichnete, beispielsweise farbig
gestaltete, Müllsäcke (vgl. 39 in Fig. 3) eingehängt
werden. Diese werden dann bei der Abholung in einem
gemeinsamen Müllsammelbehälter transportiert und erst
an der Müllabladestelle in einfacher Weise nach ihrer
Kennzeichnung in Müllgruppen sortiert.

0092164

A 902

Dr.-Ing. Herbert Moser
Patentanwalt
75 Karlsruhe, Nowackanlage 15

## Patentansprüche

1. Verfahren zum getrennten Sammeln und Aufbereiten von Hausmüll und hausmüllartigen Industrieabfällen, bei dem der Müll ohne Vermischung in mehreren Abfallgruppen gesammelt, in getrennten Behältern gelagert und getrennt abtransportiert wird, d a - d u r c h g e k e n n z e i c h n e t , daß bei der Mülleingabe eine Auswahlsteuerung betätigt und von dieser ein der Abfallgruppe angepaßtes Behandlungsverfahren angesteuert wird, welches den Müll zur Kompaktlagerung behandelt und in der Kompaktform in dem zugehörigen Behälter ablagert, und daß die einzelnen Abfallgruppen in Kompaktform abtransportiert werden.

2. Verfahren nach Anspruch 1, d a d u r c h g e - k e n n z e i c h n e t, daß der Auswahlsteuerung ein Abfallgruppen-Erkennungssystem vorgeschaltet ist, welches die Auswahlsteuerung bestimmt.

3. Verfahren zum Aufbereiten von Papier und papierartig faltbaren Kunststoffen in eine kompakte weitgehend formbeständige Paketform, bei dem das zugeführte Papier gefaltet und unter Preßdruck zu einem Preßling verdichtet wird, insbesondere als Teilschritt bei einem Verfahren nach Anspruch 1, d a d u r c h g e k e n n z e i c h n e t , daß in den Preßling mindestens ein perforierend wirkendes Element eingeführt wird, welches die erzeugte Paketform gegen Auffedern sichert.

4. Verfahren nach Anspruch 3, d a d u r c h g e - k e n n z e i c h n e t , daß das perforierend wirkende Element in den Preßling derart eingeführt wird, daß sich an den Lochrändern der Schichten Randausformungen und/oder Läppchen bilden, welche mehrere benachbarte Schichten verbinden und nach dem Zurückziehen des perforierend wirkenden Elementes gegen Auffedern sichern.

5. Vorrichtung zur Durchführung des Verfahrens nach Anspruch 1 oder 2, d a d u r c h g e k e n n - z e i c h n e t , daß in einer Müllsammelvorrichtung eine Eingabevorrichtung und den Abfallgruppen (z.B. Glas, Blech, Papier und faltbare Kunststoffe, organischer Abfall) zugeordnete Behandlungsvorrichtungen zur Erzielung einer raumsparenden Lagerungsform vorgesehen sind, daß in der den Abfallgruppen entsprechenden Anzahl Teilbehälter vorgesehen sind, daß eine Auswahlsteuervorrichtung zur Auswahl der Abfallgruppe vorhanden ist, und daß diese Auswahlsteuervorrichtung mit Auswahlelementen verbunden ist, welche die Verbindung zwischen der Eingabevorrichtung, der ausgewählten Behandlungsvorrichtung und dem zugeordneten Teilbehälter herstellen.

6. Vorrichtung nach Anspruch 5, d a d u r c h  g e - k e n n z e i c h n e t , daß die Auswahlelemente in Verbindung mit der Auswahlsteuervorrichtung so ausgebildet sind, daß eine bestimmte Abfallgruppe (Sondermüll) unbehandelt direkt in den zugeordneten Teilbehälter geleitet wird.

7. Vorrichtung nach Anspruch 5, d a d u r c h  g e - k e n n z e i c h n e t , daß die Behandlungsvorrichtung für die Abfallgruppe Glas eine Zerkleinerungsvorrichtung ist.

8. Vorrichtung nach Anspruch 5, d a d u r c h  g e - k e n n z e i c h n e t , daß die Behandlungsvorrichtung für die Abfallgruppe Blech eine Falt- und Preßvorrichtung ist.

9. Vorrichtung nach Anspruch 5, d a d u r c h g e -
k e n n z e i c h n e t , daß die Behandlungsvorrichtung für die Abfallgruppe Papier und faltbare
Kunststoffe eine Falt-Preß- und Paketfixiervorrichtung ist.

10. Vorrichtung nach Anspruch 5, d a d u r c h g e -
k e n n z e i c h n e t , daß die Behandlungsvorrichtung für die Abfallgruppe organischer Abfall
eine Preßvorrichtung enthält.

11. Vorrichtung nach Anspruch 5, d a d u r c h g e -
k e n n z e i c h n e t , daß die Behandlungsvorrichtung für die Abfallgruppe organischer Abfall
zur Ausführung einer konservierenden Nachbehandlung ausgebildet ist.

12. Vorrichtung nach Anspruch 11, d a d u r c h g e -
k e n n z e i c h n e t , daß zur Konservierung
eine UV-Lichtquelle vorhanden ist.

13. Vorrichtung zur Durchführung des Verfahrens nach
Anspruch 3 oder 4, d a d u r c h g e k e n n -
z e i c h n e t , daß in einem Aufnahmeraum (3)
relativ gegeneinander bewegbare Preßbacken (2,4)
vorgesehen sind, welche Ausnehmungen aufweisen,
durch die Faltmesser (5) hindurchgreifen, daß in dem Aufnahmeraum (3) in zu den Preßbacken (2,4) senkrechter Bewegungsrichtung Querkolben (7,8) gegeneinander bewegbar sind, und daß ferner in den Faltmessern (5) Nadeln (6) gelagert sind, welche zum Eingriff in den Aufnahmeraum (3) im Bereich des Preßlings vorschiebbar sind.

14. Vorrichtung nach Anspruch 13, d a d u r c h  g e - k e n n z e i c h n e t , daß die Preßflächen der Querkolben (7,8) zur Faltung mit mehreren Faltkanten (9,10) ausgebildet sind, und daß die Nadeln (6) derart angeordnet sind, daß sie beim Vorschub mehrere  Faltflächen des gleichen Faltstückes durchstoßen.

15. Vorrichtung nach Anspruch 13, d a d u r c h  g e - k e n n z e i c h n e t , daß die Nadeln (6) in Ausnehmungen der Preßbacken (2,4) geführt sind.

16. Vorrichtung nach Anspruch 13, d a d u r c h  g e - k e n n z e i c h n e t , daß die Nadeln (6) in Ausnehmungen der Faltmesser (5) geführt sind.

17. Vorrichtung nach Anspruch 13, d a d u r c h  g e - k e n n z e i c h n e t , daß die Nadeln (6) zur Belassung im Preßling lösbar sind.

18. Vorrichtung nach Anspruch 17, d a d u r c h  g e - k e n n z e i c h n e t , daß die Nadeln (6) als Drahtabschnitte abtrennbar sind.

19. Vorrichtung nach Anspruch 17, d a d u r c h  g e - k e n n z e i c h n e t , daß die Nadeln (6) aus einem dem Material bzw. der Weiterverarbeitung des Preßlings angepaßten Werkstoff bestehen.

20. Müllbehälter zur Verwendung in einer Müllsammelvorrichtung nach Anspruch 5, d a d u r c h  g e - k e n n z e i c h n e t , daß der rotationssymmetrische Müllbehälter (40) durch herausnehmbare radiale Trennwände (42) in mehrere Teilbehälter angepaßter Größe unterteilbar ist.

21. Müllbehälter zur Verwendung in einer Müllsammelvorrichtung nach Anspruch 5, d a d u r c h  g e - k e n n z e i c h n e t , daß der Müllbehälter (40) aus kreissektorförmigen Teilbehältern (43) zusammengesetzt ist.

0092164

Fig. 1

Fig. 2

Fig. 3

## Fig. 4

Fig. 5

Fig. 6